# EUROPÄISCHE PATENTANMELDUNG

(11) **EP 2 570 358 A2**
(43) Veröffentlichungstag der Anmeldung: **20.03.2013**
(21) Anmeldenummer: 12006508.1
(22) Anmeldetag: 17.09.2012
(51) Int. Cl.: B65D 19/38, B65D 19/42, B65D 19/10

(54) **Transportsystem für Transportbehälter oder Gitterboxen**

(30) Priorität: 16.09.2011 DE 202011105716 U; 14.11.2011 DE 102011118363
(71) Anmelder: Gerlach, Joachim, 40764 Langenfeld (DE)
(72) Erfinder: Gerlach, Joachim, 40764 Langenfeld (DE)
(74) Vertreter: Demski, Siegfried

(57) **Zusammenfassung**

Die Erfindung betrifft ein Transportsystem für Transportbehälter oder Gitterboxen, umfassend zumindest einen ersten Trägerrahmen (1, 70), welcher mit Laufrollen (9, 72, 73, 74, 83, 84, 85) ausgestattet ist. Um eine hohe Flexibilität zu erreichen und den Transport des Transportbehälters mithilfe von Paletten oder Gitterboxen zu vereinfachen, ist vorgesehen, dass der erste Trägerrahmen (1, 70) mit Laufrollen (9, 72, 73, 74, 83, 84, 85) ausgestattet ist, welche jeweils annähernd in der Mitte der Seitenränder des Trägerrahmens (1, 70) angeordnet sind und dass ein zweiter Trägerrahmen (25) Zentrierungselemente (26, 27, 28, 29) aufweist.

## Beschreibung

Die Erfindung betrifft ein Transportsystem für Transportbehälter oder Gitterboxen, umfassend zumindest einen ersten Trägerrahmen, welcher mit Laufrollen ausgestattet ist.

Gattungsgemäße Transportsysteme werden in unterschiedlichsten Ausführungsformen für den modernen Warentransport benötigt. Es sind Transporte einer Vielzahl von Waren von einem Herstellungsbetrieb zu einem weiterverarbeitenden Betrieb erforderlich, wobei der Warentransport im Wesentlichen durch Lastkraftwagen erfolgt. Ebenso besteht die Möglichkeit, die Waren in Containern oder in Güterwagen aufzunehmen. Wesentlicher Bestandteil eines Transportsystems sind Paletten, die in unterschiedlichsten Größen angeboten und zum Stapeln der Waren verwendet werden. Alternativ kommen auch Gitterboxen infrage, die einen zusätzlichen Schutz der einzelnen Waren bieten.

Die Be- und Entladung von Lastkraftwagen oder auch von Containern kann hierbei durch Gabelstapler vorgenommen werden, welche mit ihren Gabelstaplerzinken unter die Palette fahren können und somit die Palette mitsamt den Waren anheben. In der Regel werden die Waren aus dem Container oder von den Lastkraftwagen zunächst in einem dafür vorgesehen Bereich abgestellt, um anschließend entweder mit Gabelstaplern oder Hubwagen einen Weitertransport vorzunehmen. Soweit Gabelstapler für diesen Zweck eingesetzt werden, ist der manuelle Kraftaufwand relativ gering, während bei der Verwendung eines Hubwagens zunächst durch Pumpen ein Druckaufbau für einen Druckzylinder erzeugt wird, um die Gabeln des Hubwagens mitsamt der Palette zu heben und anschließend durch manuelle Kraftaufbringung in Form von Ziehen oder Drücken einen Weitertransport der Paletten zu ermöglichen. Sowohl bei Gabelstaplern als auch bei Hubwagen können jeweils nur einzelne Paletten transportiert werden, die gegebenenfalls zu mehreren übereinander gestapelt sind. Die Anzahl der Paletten ist hierbei von den aufliegenden Waren abhängig und von dem Gewicht, welches ein Hubwagen maximal bewältigen kann.

Aufgrund der Größe der Paletten ist demgegenüber durch reine Krafteinwirkung oder Verschieben auf einem vorhandenen Boden keine Möglichkeit gegeben, einen Weitertransport der Paletten vorzunehmen. Im Weiteren ist zu berücksichtigen, dass bei der Be- und Entladung von Containern oder Lastkraftwagen die Standzeiten möglichst gering gehalten werden, sodass der Be- und Entladevorgang innerhalb kürzester Zeit erforderlich ist. Wünschenswert ist es daher, dass beispielsweise mithilfe eines Gabelstaplers eine Be- oder Entladung erfolgt, während gleichzeitig bei der Entladung der Weitertransport der Paletten in anderer Form realisiert wird.

Der vorliegenden Erfindung liegt die Aufgabe zugrunde, ein neuartiges Transportsystem aufzuzeigen, welches ein sicheres Stapeln von Waren übereinander gewährleistet, aber darüber hinaus eine weitere Transportmöglichkeit ohne Verwendung eines Hubwagens oder Gabelstaplers vorsieht.

Erfindungsgemäß ist zur Lösung der Aufgabe vorgesehen, dass ein erster Trägerrahmen mit Laufrollen ausgestattet ist, welche jeweils annähernd in der Mitte der Seitenränder des Trägerrahmens angeordnet sind, und dass der erste Trägerrahmen im Rand- oder Eckbereich Distanzelemente und/oder Gleitkufen aufweist. Demgegenüber ist ein zweiter Trägerrahmen mit Zentrierungselementen ausgestattet. Weitere vorteilhafte Ausgestaltungen der Erfindung ergeben sich aus den Unteransprüchen.

Das neu entwickelte Transportsystem für Transportbehälter oder Gitterboxen sieht die Verwendung zweier Trägerrahmen vor, von denen ein erster Trägerrahmen mit Laufrollen ausgestattet ist, sodass durch manuelle Krafteinwirkung ein leichtes Verschieben oder Verdrehen des Trägerrahmens mit aufliegenden Waren ermöglicht wird. Die hierbei verwendeten Rollen sind jeweils annähernd in der Mitte der Seitenränder des Trägerrahmens angeordnet, sodass einerseits eine sichere Ausbalancierung des Trägerrahmens gegeben ist und andererseits durch die Anordnung der Laufrollen ohne Zuhilfenahme von weiteren Hilfsmitteln, wie Hubwagen oder Gabelstaplern, ein Weitertransport erfolgen kann. Um die ersten Trägerrahmen einzeln oder mit Transportbehältern stapeln und ein Kippen des ersten Trägerrahmens vermeiden zu können, ist vorgesehen, dass der erste Trägerrahmen im Rand- oder Eckbereich Distanzelemente und/oder Gleitkufen aufweist. Hierdurch wird ein seitliches Kippen des Transportsystems bei der Beladung und während des Rangierens verhindert. Der zweite Trägerrahmen ist demgegenüber mit Zentrierungselementen ausgestattet. Die Zentrierungselemente ermöglichen ein sicheres Aufsetzen des Trägerrahmens beispielsweise auf eine Palette, aber ebenso das Aufsetzen eines ersten Trägerrahmens mit Laufrollen. Durch Distanzelemente des ersten Trägerrahmens wird hierbei sichergestellt, dass nach dem Aufsetzen des ersten Trägerrahmens auf den zweiten Trägerrahmen die Laufrollen keinen Kontakt mit dem Boden oder beispielsweise einer Palette aufweisen. Damit wird eine hohe Standfestigkeit erzielt, sodass ein Übereinanderstapeln mehrerer Einheiten aus ersten und zweiten Trägerrahmen mit Transportbehältern ohne weiteres möglich ist. Darüber hinaus kann eine Anordnung bestehend aus einer unteren Palette, einem zweiten Trägerrahmen und gegebenenfalls einem ersten Trägerrahmen mit aufliegenden Transportbehältern oder Gitterboxen mithilfe eines Gabelstaplers zunächst bewegt werden, und zwar zur Be- und Entladung eines Containers oder Lastkraftwagens. Zum Weitertransport braucht der erste Trägerrahmen nur von dem zweiten Trägerrahmen abgehoben zu werden, und zwar ebenfalls mit einem Gabelstapler, sodass im Anschluss die auf den Paletten oder in den Gitterboxen gestapelten Waren mithilfe des ersten Trägerrahmens an jeden beliebigen Ort verfahren werden können. Die Verfahrbarkeit wird hierbei durch die Laufrollen gewährleistet, welche in besonderer Ausgestaltung aus zwei schwenkbeweglich gelagerten Laufrollen und zwei starr gehaltenen Laufrollen bestehen, welche jeweils diametral gegenüberliegend angeordnet sind, wobei die schwenkbeweglich gelagerten Laufrollen der kürzeren Trägerrahmenlängskante zugeordnet sind. Sowohl die schwenkbeweglichen als auch die starr gehaltenen Laufrollen sind jeweils diametral gegenüberliegend angeordnet, sodass der Trägerrahmen um seinen Mittelpunkt drehbar ist und somit einen äußerst geringen Schwenk- oder Drehradius besitzt, damit eine hochgradige Beweglichkeit des Trägerrahmens mit aufliegenden Transportbehältern oder Gitterboxen ermöglicht wird. Darüber hinaus ist eine Verfahrbarkeit auch bei schweren Lasten durch die großzügig dimensionierten Laufrollen mit Muskelkraft jederzeit möglich.

Zum Schutz der Laufrollen sind zumindest teilweise Schutzbleche vorgesehen, welche die einzelnen Laufrollen, zumindest die starr gehaltenen Laufrollen, in der Art abschirmen, dass eine Beschädigung durch die Gabelstaplerzinken beim Anfahren und Anheben des Trägerrahmens vermieden wird. Gegebenenfalls besteht auch die Möglichkeit, die schwenkbeweglich gelagerten Laufrollen mit einem Schutzblech zu versehen, welches ringförmig um die schwenkbeweglichen Laufrollen angeordnet sein kann. Eine Verbindung der Schutzbleche mit dem Trägerrahmen kann hierbei durch Verschweißen erfolgen, es sind jedoch auch alternative Befestigungsmöglichkeiten denkbar.

In weiterer Ausgestaltung der Erfindung ist vorgesehen, dass der erste Trägerrahmen mit Distanzelementen und Gleitkufen ausgestattet ist. Die Distanzelemente befinden sich unterhalb der Auflagefläche des ersten Trägerrahmens und weisen eine Anordnung auf, wie sie beispielsweise von den Paletten bekannt ist. Die Distanzelemente befinden sich beispielsweise in den Eckpunkten und in der Mittellängsachse. Somit wird die Möglichkeit gegeben, mithilfe eines Gabelstaplers jeweils aus allen Richtungen kommend seitlich mit den Gabelstaplerzinken unter den ersten Trägerrahmen zu fahren, um diesen mitsamt der Ware anzuheben. Durch die bereits genannten Schutzbleche für die Laufrollen wird sichergestellt, dass diese nicht beschädigt werden. Unterhalb der Distanzelemente können Gleitkufen vorgesehen werden, die vorzugsweise entlang der Kanten mit der längsten Ausdehnung angeordnet sind. Die Gleitkufen werden hierbei aus einem stabilen Material, vorzugsweise aus einem Metall, hergestellt, um die Stabilität zu gewährleisten. Zusätzlich können die Gleitkufen im Einzelfall mit Kunststoffgleitflächen ausgestattet sein. Üblicherweise werden Paletten gegebenenfalls über glatte Böden mithilfe eines Gabelstaplers geschoben oder in vorhandenen Abstellbereichen durch Schieben ausgerichtet. Damit eine Beschädigung der Laufrollen und des Trägerrahmens vermieden wird, ist dieser mit Gleitkufen ausgestattet, welche vorzugsweise an den Längsseiten des Trägerrahmens angeordnet sind und sich entweder über die gesamte Länge der Trägerrahmenlängskante oder zumindest teilweise erstrecken. Soweit eine teilweise Ausbildung von Gleitkufen vorgesehen ist, können sich diese beispielsweise unterhalb der Distanzelemente befinden.

In weiterer Ausgestaltung der Erfindung ist vorgesehen, dass die Zentrierungselemente aus einem zumindest teilweise umlaufenden Kragen bestehen, welcher in beide Richtungen senkrecht zur Trägerrahmenebene ausgebildet ist. Die Zentrierungselemente sind zur Führung des zweiten Trägerrahmens und Einfassung eines Transportbehälters ausgebildet, sodass diese auf eine Palette aufgesetzt werden können und der zweite Trägerrahmen von oben auf Transportbehälter aufgesetzt werden kann. Der wesentliche Grund besteht aber darin, dass der erste Trägerrahmen mit Laufrollen aufgesetzt werden kann, wobei insbesondere durch die vorhandenen Distanzelemente im Rand- oder Eckbereich durch Aufdopplungen oder Rahmenverstärkungen der erste Trägerrahmen auf dem zweiten Trägerrahmen ruht und die Laufrollen keinen Kontakt zum Boden beziehungsweise den darunter befindlichen Paletten besitzen. Hierdurch wird die Standfestigkeit sichergestellt, sodass eine derartige Anordnung ohne weiteres mithilfe eines Gabelstaplers in einen Lastkraftwagen geladen werden kann. Die erzielte Standfestigkeit ist sowohl im beladenen Zustand eines Lastkraftwagens als auch für eine vorgesehene Stellfläche gegeben. Erst dann, wenn mithilfe des Gabelstaplers der erste Trägerrahmen mit aufliegenden Transportbehältnissen oder Gitterboxen mit Waren angehoben und von dem zweiten Trägerrahmen separat abgestellt wird, ruht die Last auf den Transportrollen. Sowohl die Distanzelemente als auch die Zentrierungselemente sind großzügig dimensioniert, sodass auch bei robuster Behandlungsweise der ersten und zweiten Trägerrahmen eine lange Lebensdauer gewährleistet ist.

Die Trägerrahmen selbst können beispielsweise aus einem T-Profil bestehen, dessen längerer Schenkel in Richtung der Trägerrahmenebene ausgerichtet ist. Die kürzeren Schenkel bilden somit die Zentrierungselemente, wobei die Höhe der Zentrierungselemente durch die Dimensionierung des T-Profils vorgegeben wird. Anstelle eines T-Profils besteht auch die Möglichkeit, dass teilweise ein Rundrohr oder ein Vierkantrohr verwendet wird. Beispielsweise kann die Trägerrahmenlängsseite aus einem Vierkantrohr bestehen und die hierzu rechtwinklig angeordnete Trägerrahmenseite aus einem Rundrohr. Selbstverständlich besteht auch die Möglichkeit, die Rund- bzw. Vierkantrohre untereinander auszutauschen. Soweit jedoch Rund- oder Vierkantrohre verwendet werden, werden diese in den Eckbereichen zumindest mit einem Blechstreifen verbunden, vorzugsweise verschweißt. Alternativ besteht die Möglichkeit, dass ein Blechwinkel zum Einsatz kommt, der sich über den Eckbereich in die beiden Längskanten des Trägerrahmens erstreckt. Auch dieser Blechwinkel kann mit dem Trägerrahmen, bestehend aus einem Rund- oder Vierkantrohr, verschweißt werden. Die Verschweißung des Blechstreifens oder Blechwinkels erfolgt hierbei in der Art, dass die Kanten sowohl nach unten als auch nach oben gegenüber dem Trägerrahmen zur Zentrierung hervorstehen. Zusätzlich können die Trägerrahmen mit Bodenelementen in glatter oder gewellter Form ausgestattet werden, sodass beispielsweise auch kleindimensionierte Warenbehälter aufgelegt werden können. Derartige Ausführungsformen sind für die Aufnahme von Gitterboxen und Transportbehältern geeignet. Im Sonderfall kann eine einzelne Gitterbox bereits mit dem Trägerrahmen verbunden, vorzugsweise verschweißt werden.

In weiterer Ausgestaltung der Erfindung ist vorgesehen, dass die Trägerrahmen Abmessungen einer Standard-Europalette oder einer halben Europalette aufweisen. Somit können die Trägerrahmen mit den am meisten verwendeten Palettenformen verwendet werden. Alternativ können diese aber auch ohne weiteres an andere Formate angepasst werden. Durch die gewählten Abmessungen kann somit der erste Trägerrahmen auf einer Europalette oder Gitterbox aufgesetzt werden, sodass mehrere Gitterboxen übereinander gestapelt werden können. Zusätzlich kann der zweite Trägerrahmen auf den ersten Trägerrahmen aufgesetzt werden oder es kann gleichzeitig auf den zweiten Trägerrahmen eine Gitterbox oder ein sonstiger Transportbehälter aufgesetzt werden. Der zweite Trägerrahmen dient hierbei im Wesentlichen zur Adaption an vorhandene Paletten, insbesondere Europaletten, und sorgt für die notwendige Standfestigkeit für die ersten Trägerrahmen mit Laufrollen. Soweit der erste Trägerrahmen auf dem zweiten Trägerrahmen aufgesetzt wird, ist die Standsicherheit gegeben und eine Verfahrbarkeit nicht möglich. Die zweiten Trägerrahmen sind hierbei von ihren Abmessungen und Dimensionierungen so ausgelegt, dass diese ohne weiteres durch Muskelkraft von einer Person angehoben und auf eine Palette oder Gitterbox aufgelegt werden können, während demgegenüber die ersten Trägerrahmen mit aufliegenden Waren vorzugsweise mit einem Gabelstapler aufgesetzt werden. Soweit die Verwendung von Standardgrößen der einzelnen Warenbehälter erfolgt und diese beispielsweise an die Größe einer Europalette insofern angepasst sind, dass drei, vier oder acht Transportbehälter auf einer Europalette nebeneinander angeordnet werden können, besteht die Möglichkeit, auf diese Transportbehälter den zweiten Trägerrahmen aufzusetzen und somit einerseits die Transportbehälter sicher zu fixieren, aber darüber hinaus einen weiteren ersten Trägerrahmen auf den zweiten Trägerrahmen aufzusetzen. Dies kann bis zu einer maximalen Höhe erfolgen, wobei die Anzahl der aufgesetzten ersten und zweiten Trägerrahmen im Wesentlichen durch die Höhe der Transportbehälter und den jeweiligen Standorten bestimmt wird.

Zur Aufnahme und Lagerung der Waren beziehungsweise Warenbehälter kann der erste und/oder zweite Trägerrahmen mit einem Gitterboden oder einem geschlossenen Boden ausgestattet sein. Alternativ besteht die Möglichkeit, dass der zweite Trägerrahmen Bestandteil einer Gitterbox ist oder mit dieser fest verbunden, beispielsweise verschweißt ist. Die Gitterbox und der Trägerrahmen bilden somit eine feste Einheit, die mithilfe eines Gabelstaplers sehr leicht bewegt werden kann, und zwar beim Be- und Entladen, und gleichzeitig wird durch die vorhandenen Laufrollen sichergestellt, dass die Gitterboxen auch im Falle eines erheblichen Gewichtes sehr leicht verfahrbar sind.

In weiterer besonderer Ausgestaltung der Erfindung ist vorgesehen, dass die ersten Trägerrahmen mit einem Kopplungselement, beispielsweise in Form einer Deichsel und einem Kupplungsteil, ausgestattet sind. Das Kupplungsteil kann hierbei beispielsweise aus einem Haken und einer Öse oder einer Kugel und einer Pfanne bestehen. Mithilfe der Deichsel können somit mehrere erste Trägerrahmen mit Laufrollen miteinander verbunden werden, und zwar in Form einer Zugeinheit, welche mit einer Zugmaschine bewegt werden kann. Durch die Leichtgängigkeit der Laufrollen und die hochgradige Verschwenkbarkeit kann sich diese Zugeinheit auf engstem Territorium bewegen und ermöglicht auf diese Weise einen äußerst schnellen Transport der Waren von dem Endladeort des Lastkraftwagens zum eigentlichen Ort der Weiterverwendung.

Mithilfe der Kopplungselemente und einem Kupplungsteil besteht somit die Möglichkeit, mehrere erste Trägerrahmen, die sämtlich mit Laufrollen ausgestattet sind, in der Art miteinander zu verbinden, dass eine Zuganordnung entsteht, welche beispielsweise durch eine Zugmaschine aber ebenso mithilfe eines Gabelstaplers gezogen werden kann. Soweit ein Transport mithilfe eines Gabelstaplers erfolgt, wird der Gabelstapler von vorne mit den Gabelstaplerzinken in die erste Palette gefahren und durch leichtes Anheben der Gabelstaplerzinken über ein Rastelement, welches auf den Gabelstaplerzinken befestig ist, ein Einhaken an dem ersten Trägerrahmen ermöglicht, sodass mehrere über die Kopplungselemente und Kupplungsteile untereinander verbundenen ersten Trägerrahmen mithilfe des Gabelstaplers gezogen werden können. Im einfachsten Fall kann eine solche Rastung aus einem Winkelprofil bestehen, welches auf der Oberfläche der Gabelstaplerzinken befestigt ist. Die Befestigung erfolgt hierzu am hinteren Ende der Gabelstaplerzinken.

Soweit der Transport mithilfe eines Gabelstaplers erfolgt, besteht des Weiteren die Möglichkeit, durch Anheben des ersten Trägerrahmens mit Transportbehältern eine Endkupplung des Kopplungselementes von dem Kupplungsteil vorzunehmen, wobei die bestehende Verbindung über die Kopplungselemente und Kupplungsteile aufgehoben wird. Somit kann mithilfe des Gabelstaplers nacheinander jeder Trägerrahmen mit Transportbehältern einzeln weiter transportiert werden. Damit wird die Handhabung wesentlich vereinfacht, da ein manuelles Entkuppeln entfallen kann und der Fahrer des Gabelstaplers, ohne seine Position zu verlassen, die gesamte Zugkombination entkoppeln und die einzelnen Trägerrahmen versetzen kann. Zu diesem Zweck ist in weiterer Ausgestaltung der Erfindung vorgesehen, dass das Kupplungselement durch Federkraft in eine vertikale Position ausgerichtet ist und durch Niederdrücken in eine horizontale Position bringbar ist, um eine Verbindung mit einem Kupplungsteil eines benachbarten Trägerrahmens herzustellen. Das Niederdrücken erfolgt hierbei beim Verbinden der Zugkombination in manueller Weise durch eine Person, während demgegenüber in der beschriebenen Art und Weise die Zugkombination durch den Gabelstaplerfahrer mithilfe des Gabelstaplers aufgelöst werden kann.

In weiterer Ausgestaltung der Erfindung ist vorgesehen, dass der erste Trägerrahmen bei der Verwendung mit einer Gitterbox zusätzlich mit einer Feststellbremse ausgestattet ist. Mithilfe der Feststellbremse kann beispielsweise der Trägerrahmen mit Laufrollen und aufsitzender Gitterbox über eine Rampe in einen Lastkraftwagen verfahren werden, wobei mithilfe der Feststellbremse, welche unmittelbar zumindest auf ein Laufrad einwirkt, eine Festlegung erfolgt. Hierdurch wird der Vorteil erreicht, dass der Trägerrahmen mit Gitterboxen gesichert werden kann.

Die wesentlichen Vorteile der vodiegenden Erfindung bestehen darin, dass ein universelles Transportsystem aufgezeigt wird, welches eine Vielfalt an Kombinationsmöglichkeiten bietet, um Warenbehälter in sinnvoller Weise zu stapeln, anzuordnen und gegebenenfalls in Schwerlastregalen aufzunehmen, wobei insbesondere auch die Beladung von Containern und Lastkraftwagen im Vordergrund steht. Hierzu wird ein erster Trägerrahmen mittels Laufrollen verwendet, welcher eine leichte Verfahrbarkeit des Trägerrahmens mit aufliegenden Waren ermöglicht. Mithilfe eines zweiten Trägerrahmens, welcher Zentrierungselemente und Distanzelemente aufweist, ist die Stapelbarkeit einer größeren Anzahl von Paletten oder Gitterboxen und ersten Trägerrahmen möglich. Die Kombination des ersten und zweiten Trägerrahmens führt darüber hinaus dazu, dass die Laufrollen von dem Boden beziehungsweise von dem vorhandenen unteren Aufbau, beispielsweise einer Palette, insoweit abgehoben sind, dass eine hohe Standfestigkeit gegeben ist und die Laufrollen in keinem Kontakt mit der Palette stehen. Ein weiterer wesentlicher Vorteil ergibt sich dadurch, dass die Laufrollen jeweils annähernd in der Mitte der Längskanten angeordnet sind, sodass der Trägerrahmen mit Laufrollen um den Mittelpunkt verdrehbar ist. Somit wird wenig Raum für das Manövrieren benötigt, wobei durch die Laufrollen, welche großzügig dimensioniert sind, ein leichtes Verschieben durch Muskelkraft möglich ist.

Die Erfindung wird im Nachfolgenden anhand der Figuren nochmals erläutert.

Es zeigt
- Fig. 1: in einer perspektivischen Draufsicht einen ersten Trägerrahmen mit Bodenelementen,
- Fig. 2: in einer perspektivischen Unteransicht den Trägerrahmen gemäß Figur 1,
- Fig. 3: in einer perspektivischen Draufsicht den zweiten Trägerrahmen,
- Fig. 4: in einer perspektivischen Draufsicht die Anordnung des zweiten Trägerrahmens auf einer Palette,
- Fig. 5: in einer perspektivischen Explorationszeichnung eine Palette, den zweiten Trägerrahmen und den ersten Trägerrahmen,
- Fig. 6: in einer perspektivischen Ansicht eine Palette mit zweitem und erstem Trägerrahmen sowie aufliegenden Transportbehältern,
- Fig. 7: in einer perspektivischen Ansicht eine alternative Anordnung der ersten und zweiten Trägerrahmen mit Transportbehältern,
- Fig. 8: in einer perspektivischen Ansicht eine weitere Ausführungsvariante, wobei die Anordnung gemäß Fig. 7 zusätzlich mithilfe eines ersten und zweiten Trägerrahmens auf einer Palette gelagert ist,
- Fig. 9: in einer perspektivischen Ansicht die Verwendung des Transportsystems als Zugkombination, wobei zwei erste Trägerrahmen mit Laufrollen über eine Deichsel miteinander verbunden sind,
- Fig. 10: in einer perspektivischen Unteransicht eine vergleichbare Anordnung mit einer kleineren Ausführung des ersten Trägerrahmens,
- Fig. 11: in einer perspektivischen Ansicht die Aufnahme eines ersten Trägerrahmens mit Laufrollen und Transportbehältern in einem Regalsystem,
- Fig. 12: in einer perspektivischen Ansicht einen ersten Trägerrahmen mit Laufrollen und einer aufsitzenden Gitterbox,
- Fig. 13: in einer perspektivischen Ansicht die Anordnung der aus Fig. 12 bekannten Ausführungsform zum Aufsetzen auf eine Palette mithilfe eines zweiten Trägerrahmens,
- Fig. 14: in einer perspektivischen Ansicht die Anordnung gemäß Fig. 13 nach dem Aufsetzen auf die Transportpalette,
- Fig. 15: die Anordnung zweier Trägerrahmen mit Laufrollen und Gitterboxen in einer Zugkombination,
- Fig. 16: in einer perspektivischen Ansicht einen ersten Trägerrahmen mit Kopplungselement in einer vertikalen Position,
- Fig. 17: in einer perspektivischen Ansicht einen ersten Trägerrahmen mit einem Kopplungselement mit einer alternativen Ausgestaltung,
- Fig. 18: einen ersten Trägerrahmen mit aufgesetzter Gitterbox und einem Kopplungselement,
- Fig. 19: in einer perspektivischen Ansicht einen ersten Trägerrahmen mit aufgesetzter Gitterbox und einer alternativen Ausführungsform des Kopplungselementes,
- Fig. 20: in einer perspektivischen Ansicht eine Zugkombination aus mehreren ersten Trägerrahmen und einen Gabelstapler vor dem Einfahren in den ersten Trägerrahmen,
- Fig. 21: in einer perspektivischen Ansicht die aus Figur 20 bekannte Zugkombination nachdem der Gabelstapler den ersten Trägerrahmen aufgenommen hat,
- Fig. 22: in einer perspektivischen Ansicht das Anheben des ersten Trägerrahmens zum Entkuppeln und
- Fig. 23: in einer perspektivischen Ansicht den Gabelstapler mit einem ersten Trägerrahmen nach der Entkupplung und die verbliebene Zugkombination.

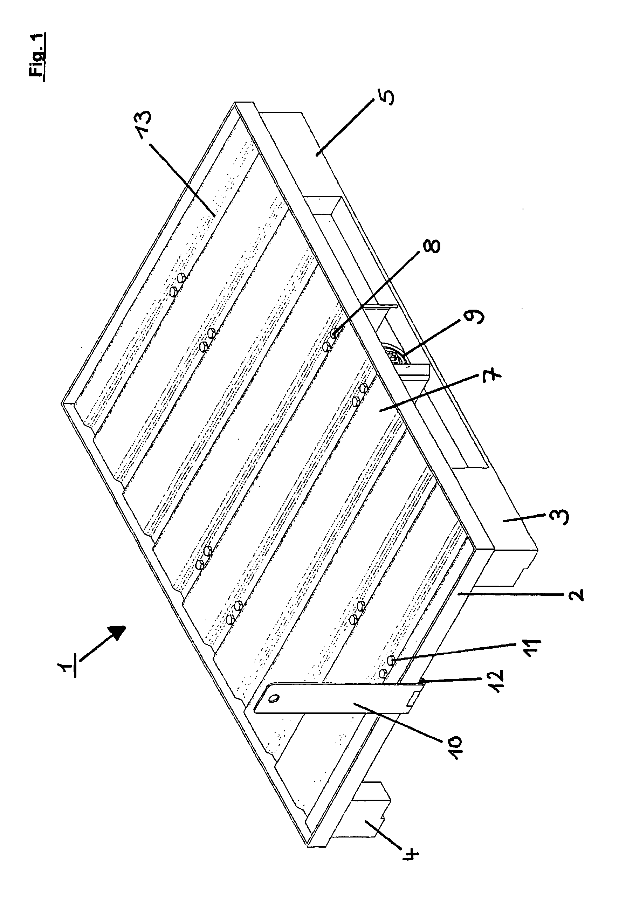

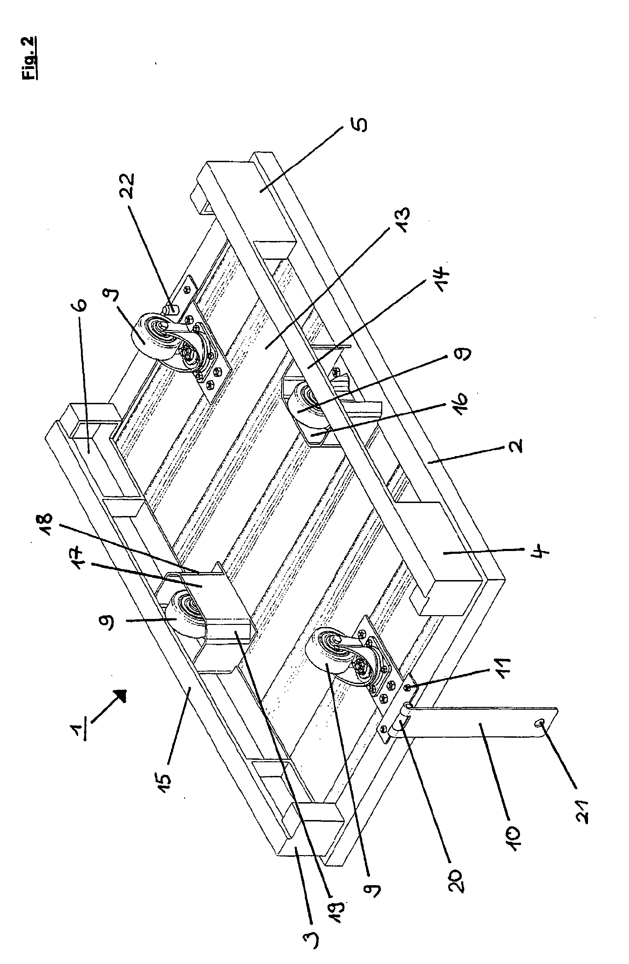

Figur 1 zeigt in einer perspektivischen Draufsicht einen ersten Trägerrahmen 1, welcher für ein erfindungsgemäßes Transportsystem verwendet werden kann. Der Trägerrahmen 1 besteht aus einem umlaufenden T-förmigen Profil 2, welches beispielsweise in den Eckbereichen miteinander verschweißt ist. Vier Distanzelemente 3, 4, 5, 6 sind in den Eckbereichen unterhalb des Trägerrahmens 1 angeordnet. Die Distanzelemente 3, 4, 5, 6 verhindern ein Kippen des ersten Trägerrahmens und ermöglichen eine erhöhte Anordnung des Trägerrahmenbodens 13, welcher im vorliegenden Fall aus einzelnen Blechpaneelen 7 besteht. Alternative Ausführungsformen können beispielsweise aus einem einstückig geformten Trägerrahmenboden bestehen. Mithilfe von Befestigungsschrauben 8 sind die auf der Unterseite angeordneten Laufrollen 9 mit dem Trägerrahmenboden 13 verschraubt. Die Laufrollen 9 befinden sich annähernd in der Mitte der Seitenränder nach innen versetzt. Die Laufrollen 9 sind insbesondere aus der Unteransicht gemäß Figur 2 ersichtlich. Des Weiteren besitzt der kürzere Seitenrand eine Deichsel 10, welche über Befestigungsbolzen 11 mit dem T-Profil 2 verbunden ist. Die Deichsel 10 ist über ein Scharnier 12 herunterklappbar, sodass eine Verbindung mit einem weiteren Trägerrahmen 1 ermöglicht wird. Die Verbindung erfolgt über eine Bohrung 21 und einen Bolzen 22.

Durch die Verwendung der Distanzelemente 3, 4, 5, 6 in den jeweiligen Eckbereichen des ersten Trägerrahmens 1 ist eine Verfahrbarkeit des Trägerrahmens auch nach einer erfolgten Beladung möglich. Aufgrund der Tatsache, dass die Laufrollen 9 jeweils annähernd in der Mitte der Längsränder angeordnet sind, kann beispielsweise der erste Trägerrahmen 1 auf der Stelle gedreht werden und ermöglicht somit unter Verwendung eines kurzen Schwenkradius eine gute Manövrierfähigkeit.

Figur 2 zeigt den ersten Trägerrahmen 1 in einer perspektivischen Unteransicht, aus der insbesondere die Position der Laufrollen 9 deutlich sichtbar wird. Die Laufrollen 9 befinden sich jeweils annähernd in der Mitte der Längsränder, wobei zwei Laufrollen 9 als starr gehaltene Laufrollen 9 mit dem Trägerrahmenboden 6 verschraubt sind, während zwei Laufrollen schwenkbar mit dem Trägerrahmenboden 6 verschraubt sind. Speziell durch die Anordnung und Position der schwenkbaren Laufrollen 9 wird hierbei die hohe Beweglichkeit des Transportrahmens 1 sichergestellt. Aus dieser perspektivischen Unteransicht ist des Weiteren erkennbar, dass insgesamt vier Distanzelemente 3, 4, 5, 6 mit dem T-Profil 2 verbunden, vorzugsweise verschweißt, sind. Die Distanzelemente 3, 6 und 4, 5 einer Seite sind zusätzlich über Gleitkufen 14, 15 stabilisierend miteinander verbunden. Die starr gehaltenen Laufrollen 9 sind zusätzlich dreiseitig von einem Schutzblech 16, 17 umgeben, damit eine Beschädigung, beispielsweise durch Gabelstaplerzinken ausgeschlossen wird. Das Schutzblech 16, 17 weist in den Kantenbereichen jeweils eine Abschrägung 18, 19 auf, sodass beim ungenauen Anfahren der Gabelstaplerzinken eine Zentrierung erfolgen kann. Die Deichsel 10 ist über Schraubbolzen 11 unmittelbar mit dem T-Profil 2 verbunden, sodass auch bei höheren Lasten auf dem Trägerrahmen 1 eine sichere Befestigung gewährleistet ist. Die Deichsel 10 wird unter Federkraft einer Feder 20 in eine senkrechte Position zum Trägerrahmen 1 gedrückt und kann durch Krafteinwirkung nach unten bewegt werden, und zwar in der Weise, dass eine Verbindung der Bohrung 21 mit einem Bolzen 22 ermöglicht wird, welcher auf der diametral gegenüberliegenden Seite des Trägerrahmens 1 angeordnet ist. Nach dem Runterdrücken der Deichsel 10 kann der Bolzen 22 in die Bohrung 21 einrasten, sodass gleichzeitig aufgrund der Federkraft die Deichsel 10 in dieser Position fixiert wird. Durch Herunterdrücken der Deichsel 10 kann die bestehende Verbindung jederzeit gelöst werden, sodass quasi ein Abkuppeln eines Trägerrahmens 1 erfolgen kann. In diesem Fall nimmt die Deichsel 10 ihre ursprüngliche Position wieder ein.

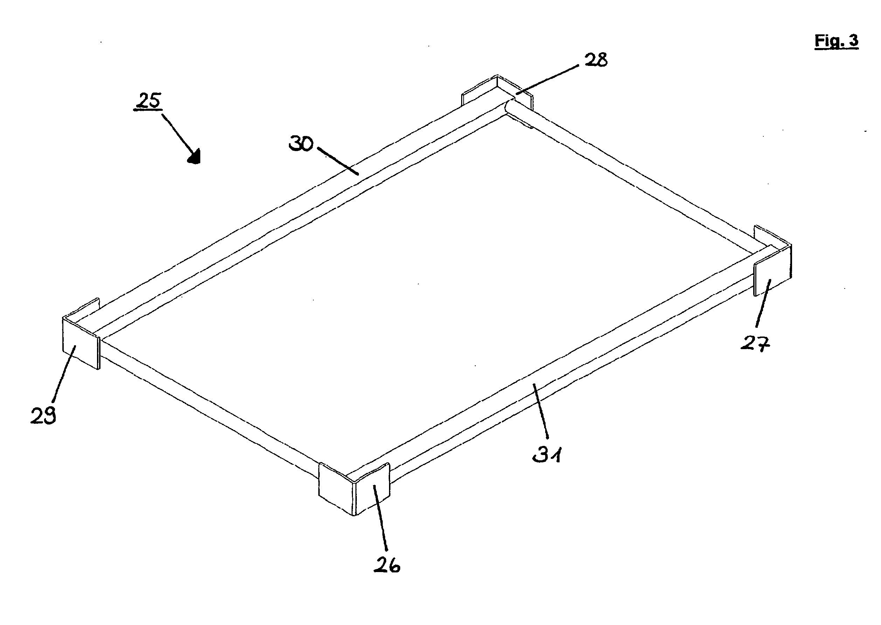

Figur 3 zeigt in einer perspektivischen Draufsicht einen zweiten Trägerrahmen 25, der mit Zentrierungselementen 26, 27, 28, 29 sowie Distanzprofilen 30, 31 ausgestattet ist. Die Zentrierungselemente 26, 27, 28, 29 sind im gezeigten Ausführungsbeispiel jeweils in den Eckbereichen angeordnet und ermöglichen ein zentriertes Aufsetzen des zweiten Trägerrahmens 25 auf beispielsweise eine Palette oder das Aufsetzen des ersten Trägerrahmens 1 auf den zweiten Trägerrahmen 25. Der erste Trägerrahmen 1 sitzt mit seinen Distanzelementen 3, 4, 5, 6 hierbei innerhalb der Zentrierungselemente 26, 27, 28, 29, sodass ein seitliches Verrutschen verhindert wird. Die Distanzprofile 30, 31 bestehen bei dem Ausführungsbeispiel aus verstärkten Längsprofilen. Die Höhe der Distanzprofile 30, 31 kann so gewählt werden, dass beim Auflegen des ersten Trägerrahmens 1 die Laufrollen 9 nicht in Berührung mit dem Boden oder einer darunter angeordneten Palette gelangen, sodass eine hohe Standfestigkeit gewährleistet ist. Mithilfe des zweiten Trägerrahmens 25 kann hierbei der verfahrbare Trägerrahmen 1 insoweit festgelegt werden, dass eine Stapelbarkeit mit weiteren Trägerrahmen 1 und Transportbehältern erfolgen kann, wobei speziell für den Fall, dass unterhalb des Trägerrahmens 25 eine Palette angeordnet ist, die Standsicherheit gewährleistet wird und mehrere dieser Anordnungen ebenso übereinander stapelbar sind.

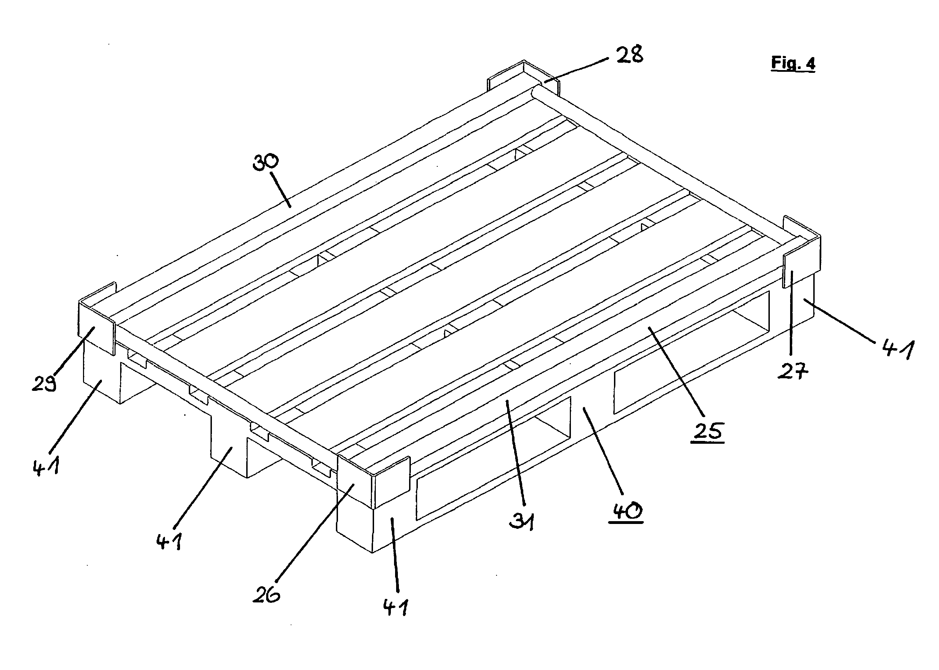

Figur 4 zeigt in einer perspektivischen Draufsicht die Anordnung einer Palette 40 mit einem aufliegenden zweiten Trägerrahmen 25. Bei der Palette handelt es sich um eine Standardpalette, die in den Eckbereichen und Längsmittelbereichen jeweils mit Distanzelementen 41 ausgestattet ist und dadurch die Möglichkeit bietet, mithilfe von Gabelstaplerzinken seitlich unter die Palette zu fahren, um diese anzuheben. Der aufliegende zweite Trägerrahmen 25 ermöglicht einerseits eine sichere Fixierung von Transportbehältern durch die Zentrierungselemente 26, 27, 28, 29 und dient zur Aufnahme des ersten Trägerrahmens 1 mit Laufrollen 9. Dieser Aufbau ist im Wesentlichen dafür vorgesehen, mithilfe eines Gabelstaplers eine schnelle Be- und Entladung eines Lastkraftfahrzeuges oder eines Containers vorzunehmen, wobei diese Anordnung nach dem Entladen getrennt werden kann, sodass der Trägerrahmen 1 mit Laufrollen 9 und der darauf befindlichen Ware, beispielsweise Transportbehältern, über die Laufrollen 9 zu seinem Bestimmungsort gebracht werden kann.

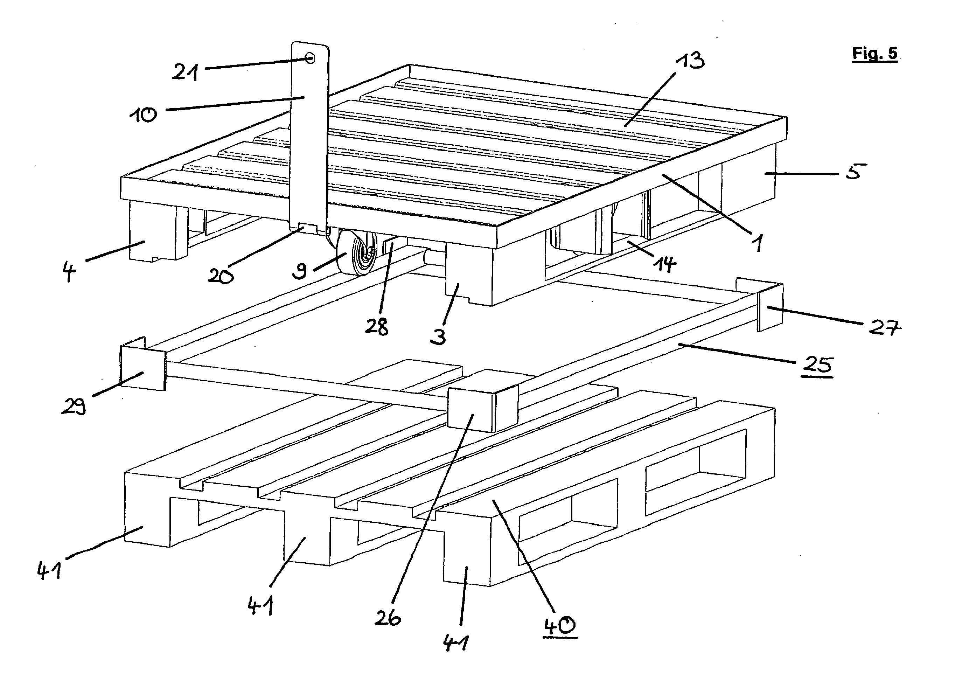

Figur 5 zeigt in einer perspektivischen Ansicht die einzelnen Komponenten vor dem Aufeinanderstapeln, und zwar die aus Figur 4 bekannte Palette 40 sowie den zweiten Trägerrahmen 25 und den ersten Trägerrahmen 1 mit Laufrollen 9. Aus dieser Perspektive wird deutlich, wie die Verwendung vorgesehen ist, um eine standsichere Aufstellung des Trägerrahmens 1 zu ermöglichen.

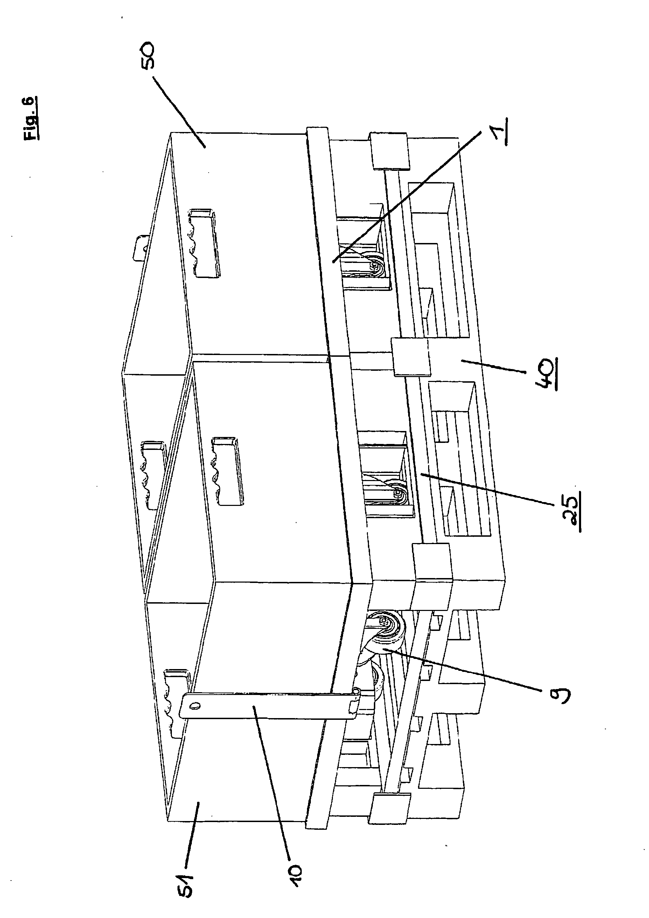

Figur 6 zeigt in einer perspektivischen Ansicht die Anordnung einer Palette 40 mit zweitem Trägerrahmen 25 und erstem Trägerrahmen 1. Auf dem Trägerrahmen 1 ruhen zwei Transportbehälter 50, 51, wobei der Trägerrahmen 1 an die Abmessungen der Transportbehälter 50, 51 insoweit angepasst ist, dass diese unverrückbar in dem Trägerrahmen 1 einliegen. Durch die Verwendung des zweiten Trägerrahmens 25 berühren die Laufrollen 9 die darunter befindliche Palette 40 nicht, sodass eine hohe Standsicherheit gewährleistet werden kann.

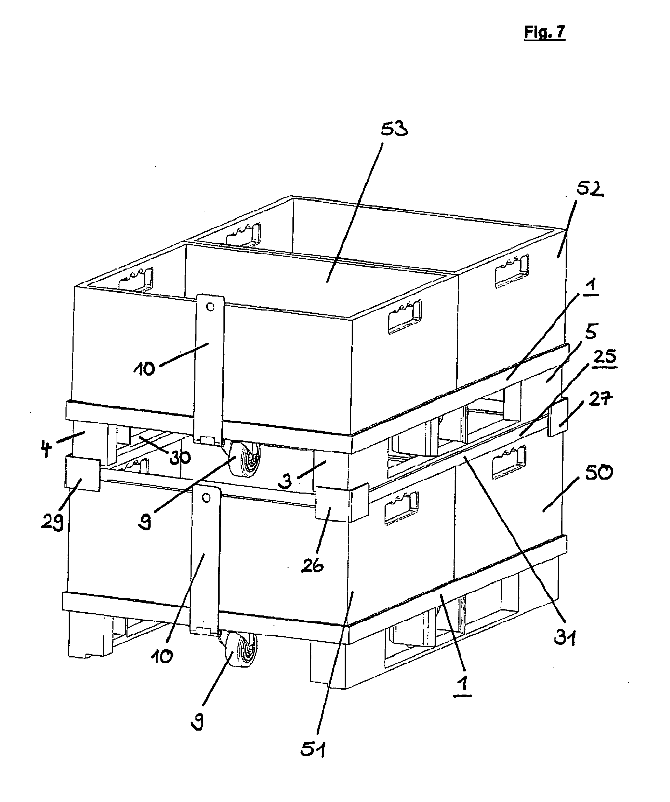

Figur 7 zeigt in einer perspektivischen Ansicht eine weitere Variante des Transportsystems, bestehend aus einem ersten Trägerrahmen 1 mit Laufrollen 9 und darauf angeordneten Transportbehältern 50, 51. Auf den Transportbehältern 50, 51 ruht ein zweiter Trägerrahmen 25, der mit seinen Zentrierungselementen 26, 27, 28, 29 die Transportbehälter 50, 51 überragt, sodass eine seitliche Fixierung gegeben ist. Die gleichen Zentrierungselemente 26, 27, 28, 29 dienen dazu, einen zweiten ersten Trägerrahmen 1 aufzunehmen, und zwar mit den Distanzelementen 3, 4, 5, 6. Somit wird der zweite erste Trägerrahmen 1 sicher auf der bereits vorliegenden gestapelten Anordnung gehalten und ein seitliches Verrutschen ausgeschlossen. Durch die stärker ausgebildeten Distanzprofile 30, 31 ist zudem sichergestellt, dass die Laufrollen 9 nicht mit den Transportbehältern 50, 51 und darin gelagerten Waren in Berührung kommen. Auf dem Trägerrahmen 1 befinden sich weitere Transportbehälter 52, 53. Je nach Höhe der Transportbehälter 50, 51, 52, 53 können mehrere Trägerrahmen 1, 25 und Transportbehälter 50, 51, 52, 53 übereinander gestapelt werden.

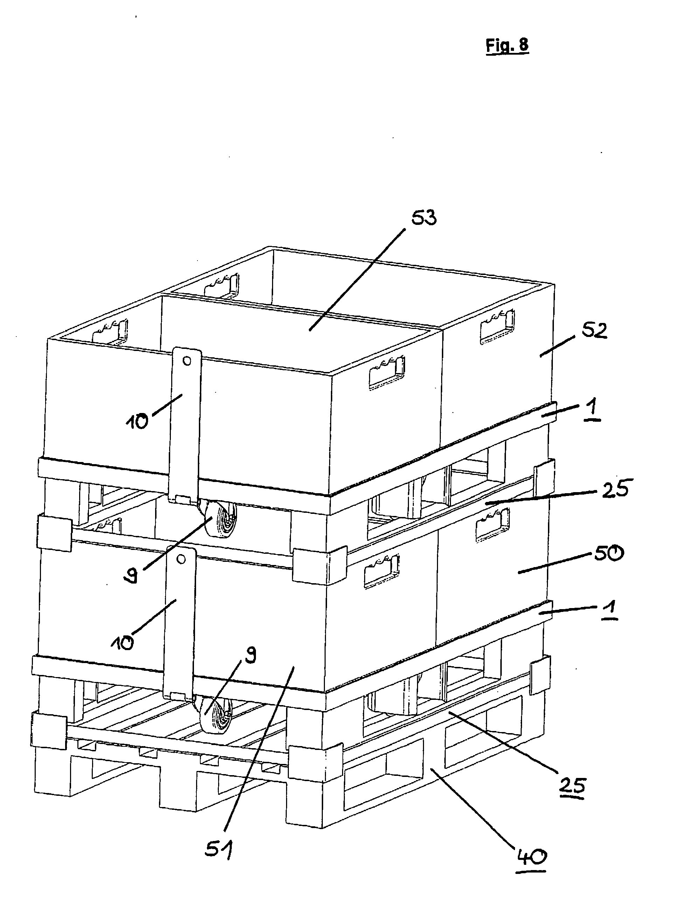

Figur 8 zeigt in einer perspektivischen Ansicht die aus Figur 7 bekannte Anordnung zweier erster Trägerrahmen 1 und zweier zweiter Trägerrahmen 25 mit Transportbehältern 50, 51, 52, 53. Diese Anordnung ist zusätzlich auf einer Palette 40 unter Zuhilfenahme eines zweiten Trägerrahmens 25 gelagert, sodass beispielsweise mithilfe eines Gabelstaplers die gesamte Anordnung auf einen LKW geladen werden kann.

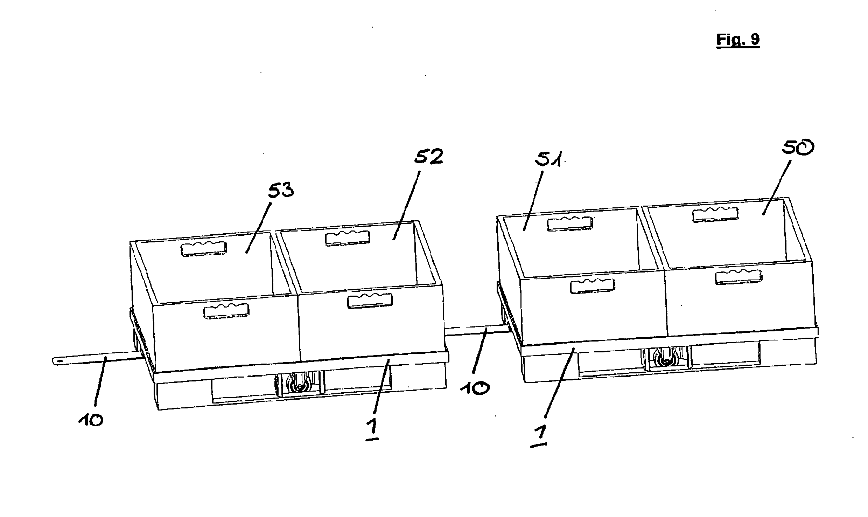

Figur 9 zeigt in einer perspektivischen Ansicht eine weitere Verwendungsmöglichkeit, und zwar in der Form, dass die ersten Trägerrahmen 1 über die Deichsel 10 in der beschriebenen Art und Weise miteinander verbunden sind und somit eine Zugeinheit bilden, welche von einer Antriebsmaschine gezogen werden kann. Die Antriebsmaschine selbst ist nicht dargestellt. Auf den Trägerrahmen 1 sind Transportbehälter 50, 51, 52, 53 aufgesetzt.

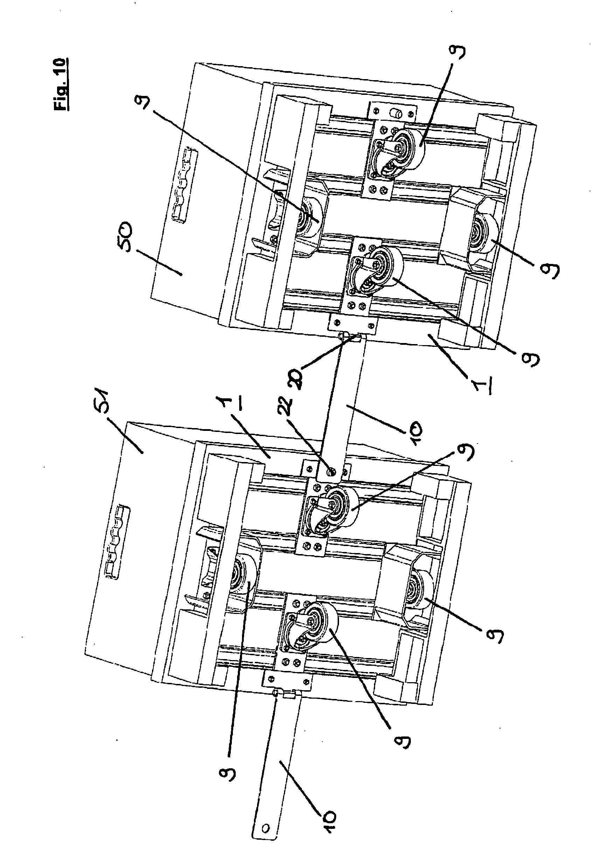

Figur 10 zeigt in einer perspektivischen Unteransicht eine weitere Ausführungsform eines Transportsystems mit einer abweichenden Baugröße, welches jeweils zur Aufnahme eines Transportbehälters 50, 51 vorgesehen ist. Die ersten Trägerrahmen 1 sind mit Laufrollen 9 in der beschriebenen Weise ausgestattet, sodass eine leichte Verfahrbarkeit gegeben ist. Sowohl in Figur 9 als auch in Figur 10 sind die einzelnen Trägerrahmen 1 über die Deichsel 10 miteinander verbunden, wobei die Deichsel 10 durch Herunterklappen gegen die Federkraft der Feder 20 auf dem Bolzen 22 festgelegt wird. Durch Herunterdrücken der Deichsel 10 können die beiden Trägerrahmen 1 jederzeit wieder voneinander getrennt werden.

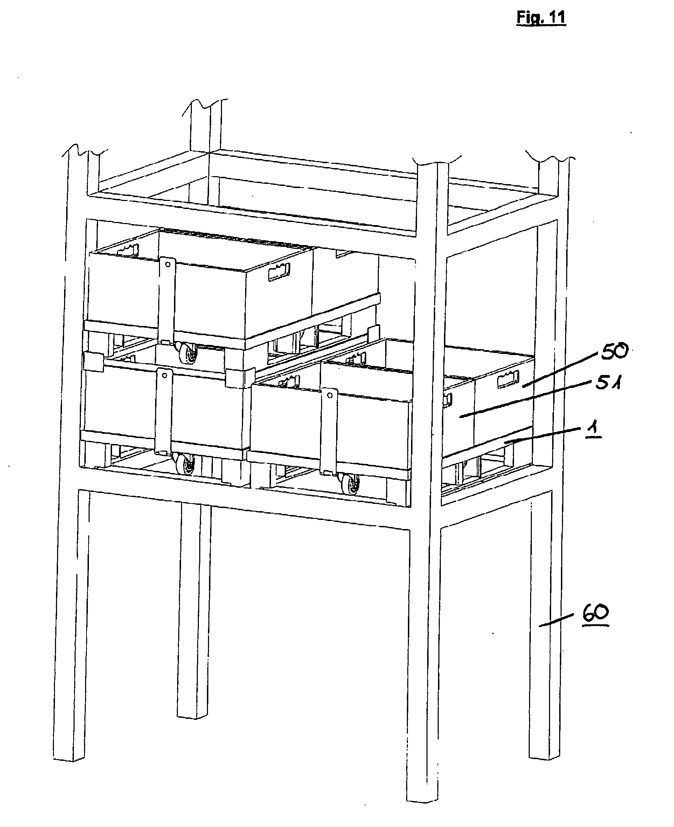

Figur 11 zeigt in einer perspektivischen Ansicht eine mögliche Positionierung der Trägerrahmen 1 mit Transportbehältern 50, 51 in einem Hochregallager 60.

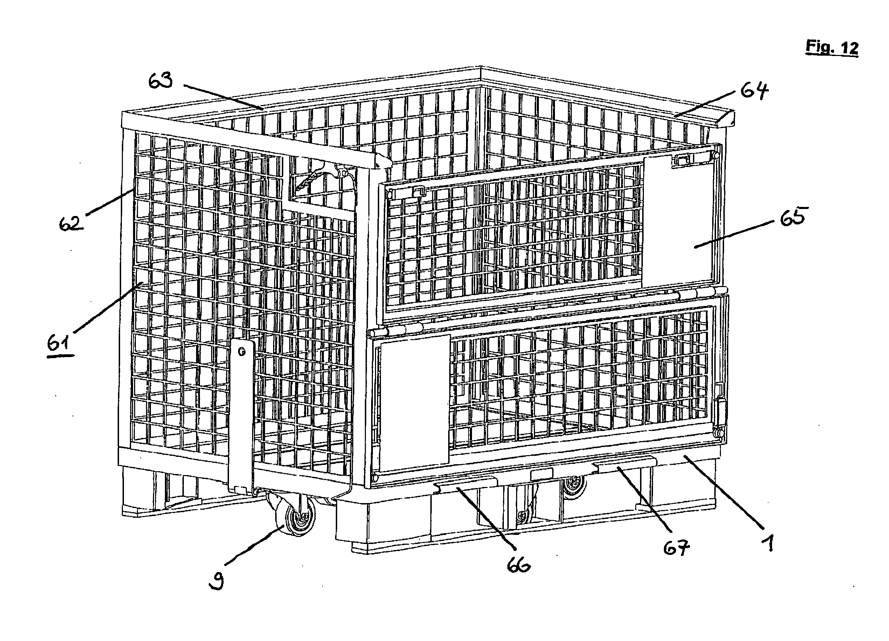

Figur 12 zeigt in einer perspektivischen Ansicht eine alternative Ausführungsform des Transportsystems mit einem ersten Trägerrahmen 1 in der bekannten Ausführungsform, wobei auf dem Trägerrahmen 1 eine Gitterbox 61 angeordnet ist. Die Gitterbox 61 weist drei feststehende Seitenelemente 62, 63, 64 und eine bewegliche Seitenwand 65 auf. Die Gitterbox 61 ruht unmittelbar auf dem ersten Trägerrahmen 1 und kann im Bedarfsfall in einer speziellen Ausführungsform mit diesem verbunden, beispielsweise verschweißt werden, sodass eine Trennung nicht mehr möglich ist. Um eine Beschädigung der Seitenwand 65 auszuschließen, besitzt der erste Trägerrahmen 1 seitliche Abstandshalter 66, 67, die im Wesentlichen dem Schutz der Gitterbox 61 dienen. Die Gitterbox 61 ist im Weiteren mit einer Feststellbremse 68 ausgestattet, die unmittelbar auf zumindest ein Laufrad 9 wirkt, sodass eine Arretierung des Trägerrahmens 1 mit Gitterbox 61 möglich ist.

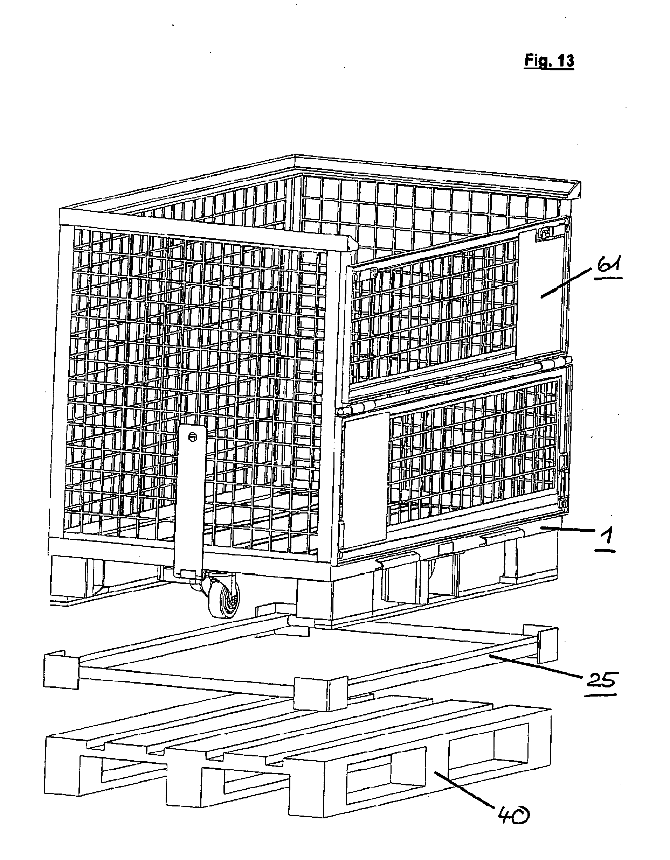

Figur 13 zeigt in einer perspektivischen Ansicht die Möglichkeit des Aufsetzens der Anordnung gemäß Figur 12 mit der Gitterbox 61 auf eine Palette 40 unter Zuhilfenahme des zweiten Trägerrahmens 25. Die Palette 40 sowie der zweite Trägerrahmen 25 sind in identischer Weise wie in den zuvor beschriebenen Ausführungsbeispielen aufgebaut.

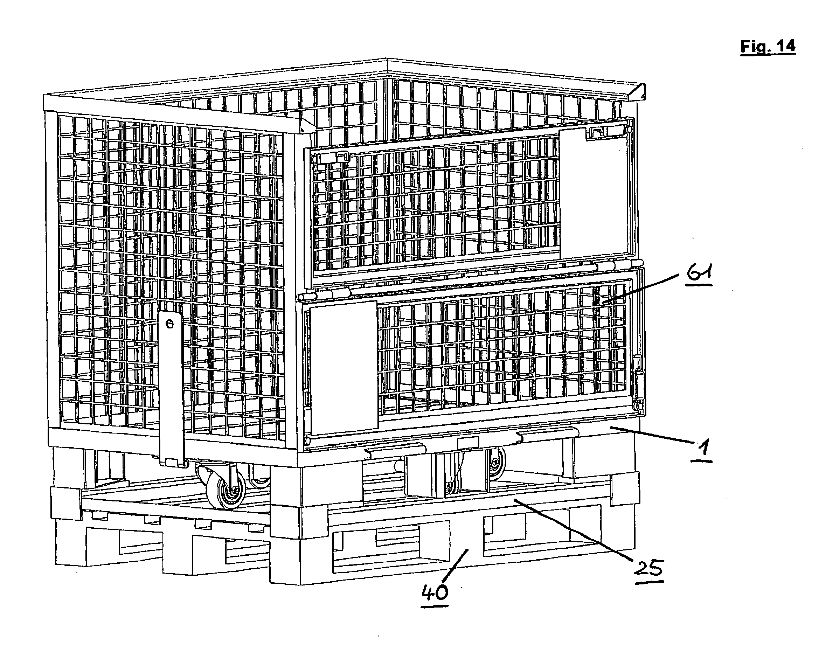

Figur 14 zeigt die Anordnung gemäß Figur 13 nach dem Zusammenfügen der Palette 40 und des zweiten Trägerrahmens 25 mit dem ersten Trägerrahmen 1 und der aufsitzenden Gitterbox 61.

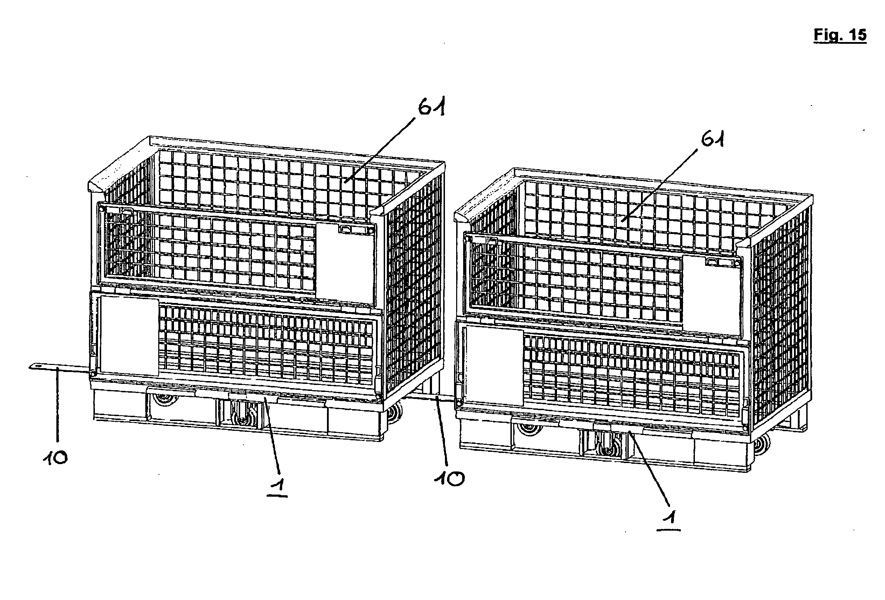

Figur 15 zeigt in einer perspektivischen Ansicht das Transportsystem gemäß Figur 12 mit Gitterboxen 61 und erstem Trägerrahmen 1 als Zugkombination, wobei wiederum eine Verbindung der Trägerrahmen 1 mithilfe einer Deichsel 10 in der beschriebenen Art und Weise erfolgt.

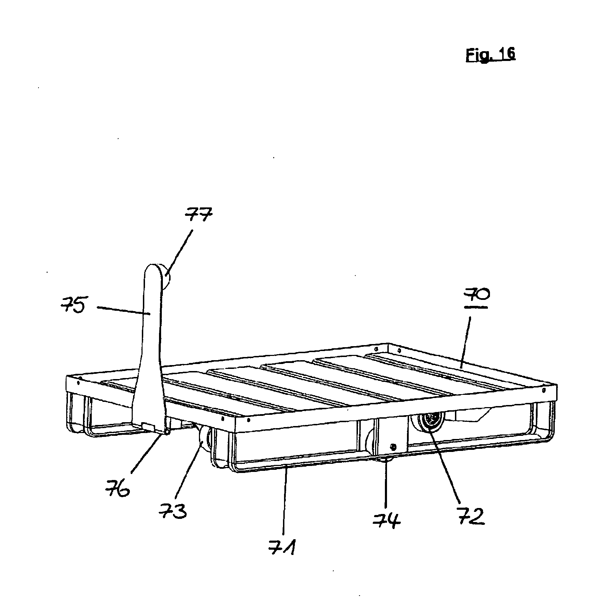

Figur 16 zeigt in einer perspektivischen Ansicht eine weitere Ausführungsvariante eines ersten Trägerrahmens 70, wie er beispielsweise aus der Figur 1 bekannt ist. Der Aufbau ist ähnlich gestaltet, wobei dieser erste Trägerrahmen 70 mit Gleitkufen 71 ausgestattet ist, die sich über die gesamte Längsausdehnung des ersten Trägerrahmens 70 erstrecken. Ebenso wie die vorhergehend beschriebenen Ausführungsvarianten ist der erste Trägerrahmen 70 mit Laufrollen 72, 73, 74 ausgestattet. Darüber hinaus weist der erste Trägerrahmen 70 eine Deichsel 75 auf, welche über ein Scharnier 76 unter Federvorspannung steht, sodass die Deichsel 75 in eine vertikale Position gedrückt wird. Durch manuelles Niederdrücken der Deichsel 75 besteht die Möglichkeit das Kopplungselement 77 in Form einer kalottenförmigen Erhebung mit einem benachbarten ersten Trägerrahmen zu kuppeln, wobei das Kopplungselement 77 in eine entsprechende Rastung zum Kuppeln des benachbarten ersten Trägerrahmens 70 eingreift.

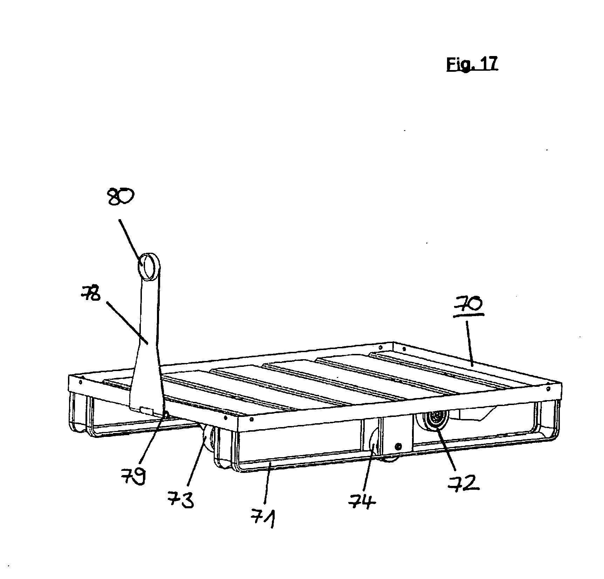

Figur 17 zeigt in einer perspektivischen Ansicht den aus Figur 16 bekannten ersten Trägerrahmen 70 mit Laufrollen 72, 73, 74 und Gleitkufen 71. Eine Deichsel 78 ist ebenfalls über ein Scharnier 79 gelenkig an den ersten Trägerrahmen 70 angelenkt und kann durch einfaches Niederdrücken in eine horizontale Position gebracht werden, während die vertikale Position durch eine nicht dargestellte Feder erreicht wird. Gegenüber der Ausgestaltung der Figur 16 ist als Kopplungselement 80 in diesem Fall ein Ring vorgesehen, welcher mit einem korrespondierenden Kupplungsteil des benachbarten ersten Trägerrahmens 70 verkuppelt werden kann.

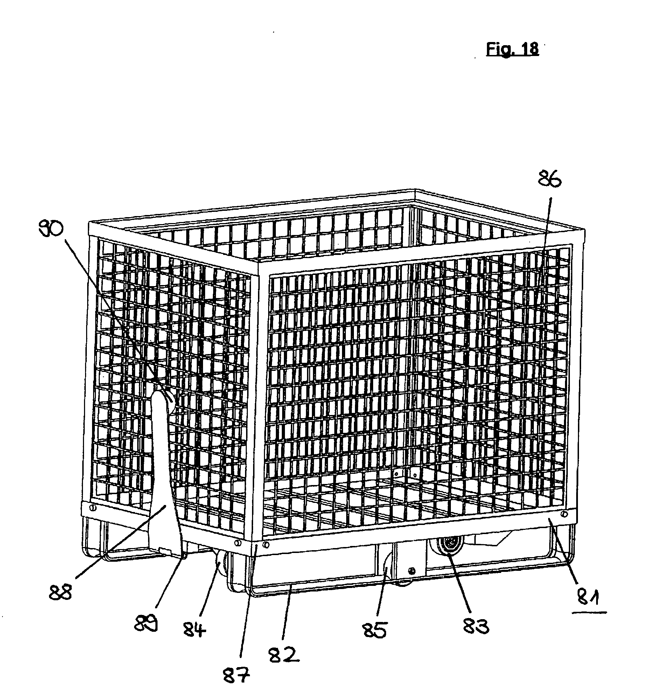

Figur 18 zeigt analog zu Figur 16 und 17 einen ersten Trägerrahmen 81 mit Gleitkufen 82 und Laufrollen 83, 84, 85, wobei auf diesen ersten Trägerrahmen 81 eine Gitterbox 86 aufgesetzt und mithilfe von Schraubbolzen 87 befestigt ist. Auch diese Ausführungsvariante weist eine Deichsel 88 auf, welche über ein Scharnier 89 mit dem ersten Trägerrahmen 81 in der Art verbunden ist, dass mithilfe einer Feder eine vertikale Position erreicht wird. Durch manuelles Niederdrücken der Deichsel 88 besteht die Möglichkeit eine Verbindung mit einem benachbarten ersten Trägerrahmen 81 vorzunehmen. Zu diesem Zweck ist die Deichsel 88 mit einem kalottenförmigen Kopplungselement 90 ausgestattet, welches in eine korrespondierende Vertiefung eines benachbarten Trägerrahmens 81 einrastet.

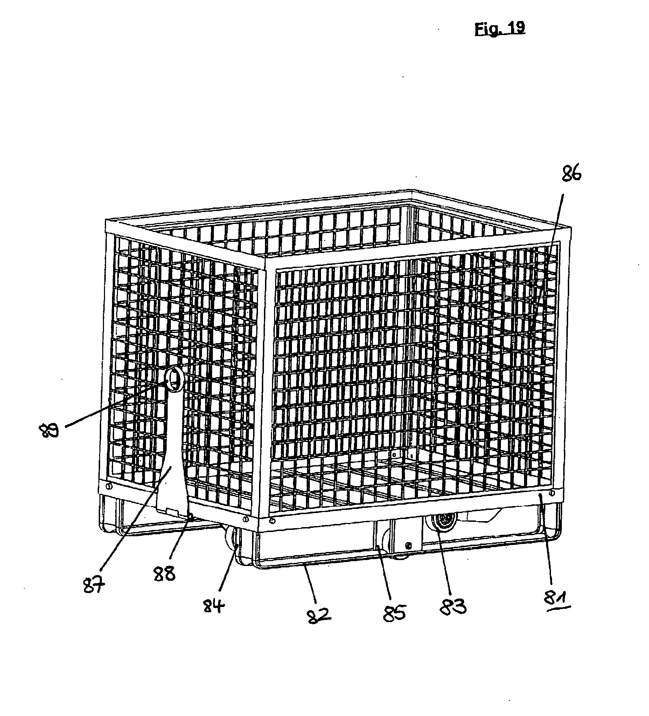

Figur 19 zeigt in einer perspektivischen Ansicht die aus Figur 18 bekannte Ausführungsform eines ersten Trägerrahmens 81 mit Gitterbox 86 und Gleitkufen 82. Die Deichsel 88 ist hierbei analog der Figur 17 ausgebildet und ist über ein Scharnier 89 mit dem ersten Trägerrahmen 81 verbunden, wobei die Deichsel 88 durch Federkraft in eine vertikale Position gedrückt wird. Wie aus Figur 17 bekannt, besitzt die Deichsel 88 eine ringförmige Öse als Kopplungselement 89, welche zur Kupplung mit benachbarten ersten Trägerrahmen 81 vorgesehen ist.

Die Kopplungselemente und Kupplungsteile dienen im Wesentlichen dazu eine Zugkombination herzustellen, die mithilfe einer Zugmaschine durch die Industrieanlagen, insbesondere Werkhallen, gezogen werden kann. Hierzu kann eine normale Zugmaschine verwendet werden oder, wie in den nachfolgenden Figuren dargestellt, ein Gabelstapler.

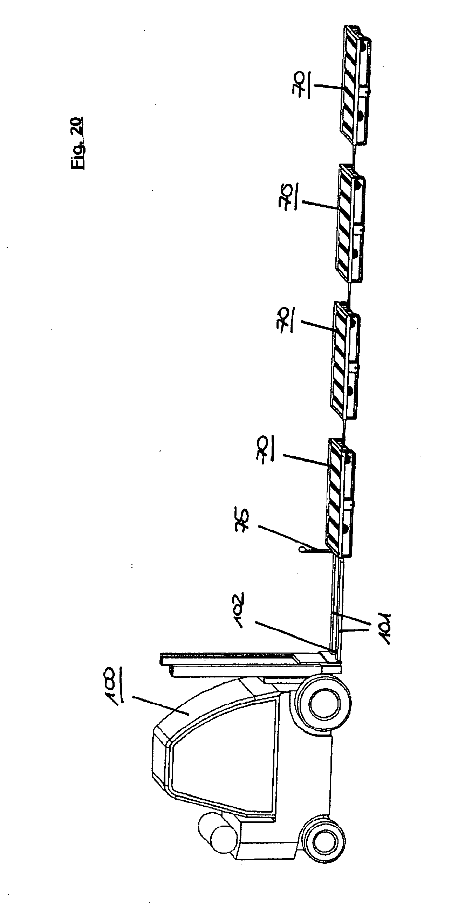

Figur 20 zeigt in einer perspektivischen Ansicht einen nicht näher beschriebenen Gabelstapler 100, weicher mit Gabelstaplerzinken 101 zum Anheben von Paletten, beziehungsweise in diesem Fall zum Anheben der ersten Trägerrahmen 70, vorgesehen ist. Um mithilfe des Gabelstaplers 100 die einzelnen miteinander gekuppelten Trägerrahmen 70 ziehen zu können, fährt der Gabelstaplerfahrer mit den Gabelstaplerzinken 101 soweit unter den ersten Trägerrahmen 70, dass ein Rastelement 102 ein Verhaken mit der Unterseite des ersten Trägerrahmens 70 ermöglicht, um nach dem Verhaken die gesamte Zugkombination ziehen zu können. Der besondere Vorteil dieser Ausgestaltung besteht darin, dass gleichzeitig mithilfe des Gabelstaplers 100 vor Ort der gesamte Zug entkoppelt werden kann.

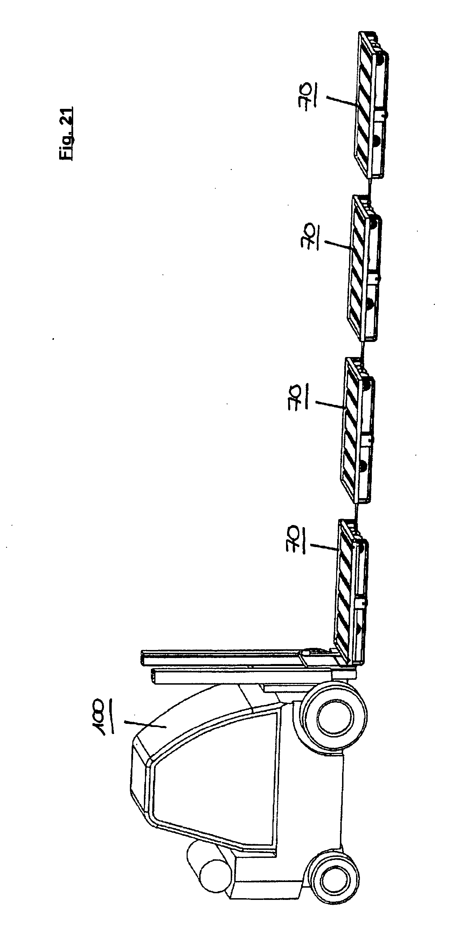

Figur 21 zeigt in einer perspektivischen Ansicht den Gabelstapler 100, nachdem dieser mit der Zugkombination, bestehend aus dem ersten Trägerrahmen 70, verbunden ist, sodass durch Ziehen mithilfe des Gabelstaplers 100 ein Transport ausgeführt werden kann. Hierzu dient das aus Figur 20 dargestellte Rastelement 102.

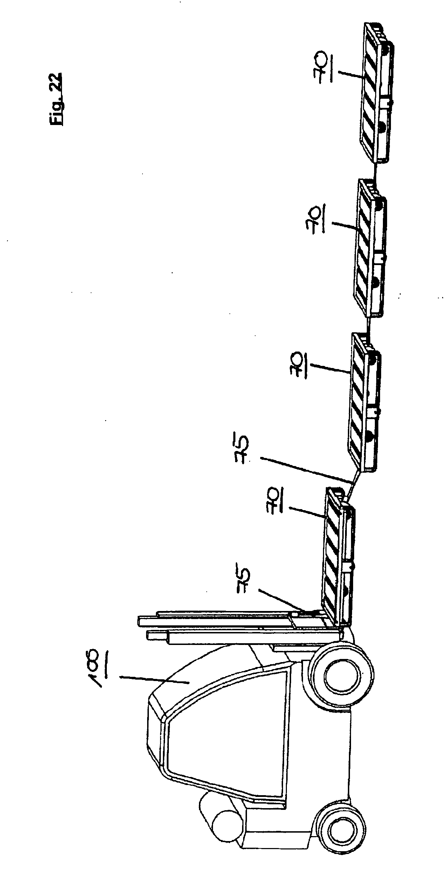

Figur 22 zeigt in einer perspektivischen Ansicht einen möglichen Entkupplungsvorgang, bei dem mithilfe des Gabelstaplers 100 der erste Trägerrahmen 70 soweit angehoben wird, dass das Kopplungselement 75 aus der vorhandenen Mulde ausklinkt und somit der erste gezogene Trägerrahmen 70 entkuppelt werden kann.

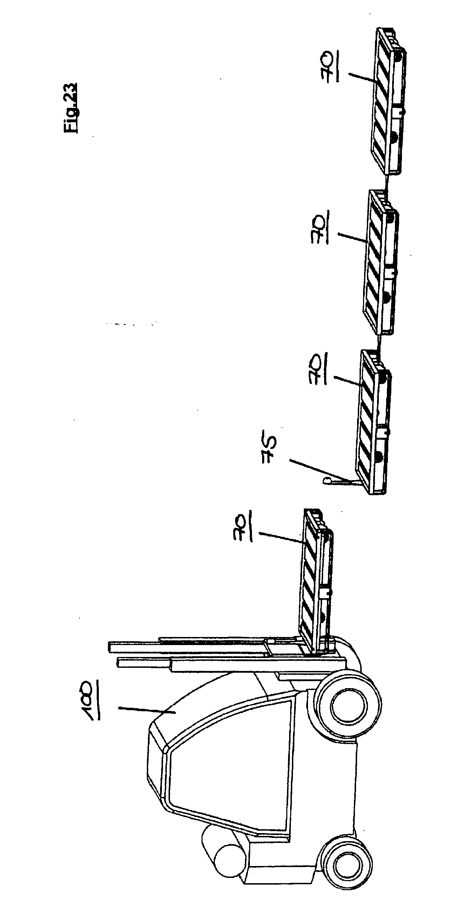

Figur 23 zeigt in einer perspektivischen Ansicht wiederum die aus den vorgenannten Figuren bekannte Anordnung aus Gabelstapler und ersten Trägerelementen 70 nach dem Entkupplungsvorgang des ersten Trägerrahmens 70, in dem der erste Trägerrahmen 70 mithilfe des Gabelstaplers soweit angehoben wird, dass das Kopplungselement 75 aus der korrespondierenden Mulde ausrastet und die Verbindung von der vorher bestandenen Zugkombination aufgehoben ist. Der erste Trägerrahmen 70 kann mit oder ohne Transportbehälter in die endgültige Position durch den Gabelstapler 100 gefahren werden. Hierbei besteht die Möglichkeit, dass sämtliche der vorhandenen ersten Trägerrahmen 70 nacheinander entkuppelt werden, um in die gewünschte Position verfahren zu werden.

### Bezugszeichenliste:

- 1: Trägerrahmen
- 2: T-Profil
- 3: Distanzelement
- 4: Distanzelement
- 5: Distanzelement
- 6: Distanzelement
- 7: Blechpaneele
- 8: Befestigungsschraube
- 9: Laufrolle
- 10: Deichsel
- 11: Befestigungsbolzen
- 13: Trägerrahmenboden
- 14: Gleitkufe
- 15: Gleitkufe
- 16: Schutzblech
- 17: Schutzblech
- 18: Abschrägung
- 19: Abschrägung
- 20: Feder
- 21: Bohrung
- 22: Bolzen
- 25: Trägerrahmen
- 26: Zentrierungselement
- 27: Zentrierungselement
- 28: Zentrierungselement
- 29: Zentrierungselement
- 30: Distanzprofil
- 31: Distanzprofil
- 40: Palette
- 41: Distanzelement
- 50: Transportbehälter
- 51: Transportbehälter
- 52: Transportbehälter
- 53: Transportbehälter
- 60: Hochregallager
- 61: Gitterbox
- 62: Seitenelement
- 63: Seitenelement
- 64: Seitenelement
- 65: Seitenwand
- 66: Abstandshalter
- 67: Abstandshalter
- 68: Feststellbremse
- 70: Trägerrahmen
- 71: Gleitkufen
- 72: Laufrollen
- 73: Laufrollen
- 74: Laufrollen
- 75: Deichsel
- 76: Scharnier
- 77: Kopplungselement
- 78: Deichsel
- 79: Scharnier
- 80: Kopplungselement
- 81: Trägerrahmen
- 82: Gleitkufen
- 83: Laufrolle
- 84: Laufrolle
- 85: Laufrolle
- 86: Gitterbox
- 87: Schraubbolzen
- 88: Deichsel
- 89: Scharnier
- 90: Kopplungselement
- 100: Gabelstapler
- 101: Gabelstaplerzinken
- 102: Rastelement

## Patentansprüche

1. Transportsystem für Transportbehälter oder Gitterboxen, umfassend zumindest einen ersten Trägerrahmen (1, 70), welcher mit Laufrollen (9, 72, 73, 74, 83, 84, 85) ausgestattet ist,
**dadurch gekennzeichnet,**
**dass** der erste Trägerrahmen (1, 70) mit Laufrollen (9, 72, 73, 74, 83, 84, 85) ausgestattet ist, welche jeweils annähernd in der Mitte der Seitenränder des Trägerrahmens (1, 70) angeordnet sind, und dass der erste Trägerrahmen (1, 70) im Rand- oder Eckbereich Distanzelemente (3, 4, 5, 6) und/oder Gleitkufen (14, 15, 17, 82) aufweist.

2. Transportsystem für Transportbehälter oder Gitterboxen, umfassend zumindest einen ersten Trägerrahmen (1, 70), welcher mit Laufrollen (9, 72, 73, 74, 83, 84, 85) ausgestattet ist,
**dadurch gekennzeichnet,**
**dass** ein zweiter Trägerrahmen (25) Zentrierungselemente (26, 27, 28, 29) aufweist.

3. Transportsystem nach Anspruch 1,
**dadurch gekennzeichnet,**
**dass** die Laufrollen (9, 72, 73, 74, 83, 84, 85) in der Art angeordnet sind, dass der Trägerrahmen (1, 70) um seinen Mittelpunkt in der Trägerrahmenebene drehbar ist.

4. Transportsystem nach Anspruch 1 oder 3,
**dadurch gekennzeichnet,**
**dass** zwei schwenkbeweglich gelagerte Laufrollen (9, 72, 73, 74, 83, 84, 85) und zwei starr gehaltene Laufrollen (9, 72, 73, 74, 83, 84, 85) vorgesehen sind, welche jeweils diametral gegenüber liegend angeordnet sind, wobei die schwenkbeweglich gelagerten Laufrollen (9, 72, 73, 74, 83, 84, 85) der kürzeren Trägerrahmenlängskante zugeordnet sind.

5. Transportsystem nach Anspruch 1, 3 oder 4,
**dadurch gekennzeichnet,**
**dass** die Laufrollen (9, 72, 73, 74, 83, 84, 85) zumindest teilweise durch Schutzbleche (16, 17) des Trägerrahmens (1, 70) verdeckt liegend angeordnet sind.

6. Transportsystem nach einem der Ansprüche 1 oder 3 bis 5,
**dadurch gekennzeichnet,**
**dass** die Distanzelemente (3, 4, 5, 6) aus Aufdoppelungen oder Rahmenverstärkungen bestehen.

7. Transportsystem nach Anspruch 2,
**dadurch gekennzeichnet,**
**dass** die Zentrierungselemente (26, 27, 28, 29) aus einem zumindest teilweise umlaufenden Kragen bestehen, welcher zumindest in eine, vorzugsweise in beide Richtungen senkrecht zur Trägerrahmenebene ausgebildet ist.

8. Transportsystem nach einem der Ansprüche 1 bis 7,
**dadurch gekennzeichnet,**
**dass** die Trägerrahmen (1, 25, 70) aus einem T-Profil (2) bestehen, dessen längerer Schenkel in Richtung der Trägerrahmenebene ausgerichtet ist, oder dass die Trägerrahmen (1, 25, 70) zumindest teilweise aus einem Rundrohr oder Vierkantrohr bestehen, welche in den Eckbereichen mit einem Blechstreifen oder einem Blechwinkel verbunden, vorzugsweise verschweißt sind.

9. Transportsystem nach einem der Ansprüche 1 bis 8,
**dadurch gekennzeichnet,**
**dass** die Trägerrahmen (1, 25, 70) Abmessungen einer Standart-Europalette oder einer halben Europalette aufweisen.

10. Transportsystem nach einem der Ansprüche 2 oder 7 bis 9,
**dadurch gekennzeichnet,**
**dass** der zweite Trägerrahmen (25) auf eine Europalette (40) oder Gitterbox (61, 86) aufsetzbar ausgebildet ist.

11. Transportsystem nach einem der Ansprüche 1 bis 10,
**dadurch gekennzeichnet,**
**dass** der erste Trägerrahmen (1, 70) auf den zweiten Trägerrahmen (25) aufsetzbar ist, und/oder dass auf den ersten Trägerrahmen (1, 70) eine Gitterbox (61, 86)oder ein Transportbehälter aufsetzbar ist.

12. Transportsystem nach einem der Ansprüche 1 bis 11,
**dadurch gekennzeichnet,**
**dass** der erste (1, 70) und/oder zweite Trägerrahmen (25) mit einem Gitterboden oder einem geschlossenen Boden ausgestattet ist, und/oder dass der erste Trägerrahmen (1, 70) Bestandteil einer Gitterbox (61, 86) ist oder mit dieser fest verbunden, beispielsweise verschweißt, ist.

13. Transportsystem nach einem der Ansprüche 1 bis 12,
**dadurch gekennzeichnet,**
**dass** die ersten Trägerrahmen (1, 70) mit einem Kopplungselement, beispielsweise in Form einer Deichsel (10, 75, 78, 88) und einem Kupplungsteil, beispielsweise Haken und Ösen, Kugel und Pfanne oder einer Bohrung (21) und einem Bolzen (22) ausgestattet ist, und/oder dass der erste Trägerrahmen (1, 70) eine Feststellbremse (68) aufweist.

14. Transportsystem nach einem der Ansprüche 1 bis 13,
**dadurch gekennzeichnet,**
**dass** die Deichsel (75, 78, 88) durch Federkraft in eine vertikale Position ausgerichtet ist und durch Niederdrücken in eine horizontale Position bringbar ist, um eine Verbindung mit einem Kupplungsteil eines benachbarten Trägerrahmens (1, 70) herzustellen.

15. Transportsystem nach einem der Ansprüche 1 bis 14,
**dadurch gekennzeichnet,**
**dass** eine Zugmaschine oder ein Gabelstapler (100) mit einem Rastelement (102) ausgestattet ist, welches in eine korrespondierende Vertiefung des ersten Trägerrahmens (1, 70) oder Bodens eingreift oder mit dem Trägerrahmen (1, 70) verrastet.
